# FASCICULE DE BREVET EUROPEEN

(11) **EP 2 689 211 B1**
(45) Date de publication et mention de la délivrance du brevet: **15.08.2018**
(21) Numéro de dépôt: 12709630.3
(22) Date de dépôt: 16.03.2012
(51) Int. Cl.: G06T 7/20, G01C 17/38, G01C 19/00, G01C 25/00

(54) **PROCEDE POUR ACTUALISER UNE VALEUR D'ORIENTATION PAR RAPPORT AU NORD OU POUR AMELIORER L'INITIALISATION D'UNE TELLE VALEUR DANS UN APPAREIL COMPRENANT UN CAPTEUR D'IMAGE**
VERFAHREN ZUR AKTUALISIERUNG EINES ORIENTIERUNGSWERTES BEZÜGLICH NORD ODER ZUR VERBESSERUNG DER INITIALISIERUNG EINES SOLCHEN WERTES IN EINER VORRICHTUNG MIT EINEM BILDSENSOR
METHOD FOR UPDATING A VALUE OF ORIENTATION WITH RESPECT TO NORTH OR FOR IMPROVING THE INITIALIZATION OF SUCH A VALUE IN AN APPARATUS COMPRISING AN IMAGE SENSOR

(30) Priorité: 21.03.2011 FR 1100855
(43) Date de publication de la demande: 29.01.2014
(73) Titulaire: Safran Electronics & Defense, 92100 Boulogne-Billancourt (FR)
(72) Inventeur: REYMOND, Georges-Olivier, 92100 Boulogne-Billancourt (FR); LAMARRE, Hervé, 92100 Boulogne-Billancourt (FR); ROSELLINI, Lionel, 92100 Boulogne-Billancourt (FR)
(74) Mandataire: Beaudouin-Lafon, Emmanuel
(86) Numéro de dépôt international: PCT/EP2012/054727
(87) Numéro de publication internationale: WO 2012/126857

(56) Documents cités:
- JP-A- 2009 074 859
- US-A1- 2005 022 402

## Description

L'invention concerne l'initialisation et l'actualisation d'une information d'orientation d'un appareil par rapport au Nord géographique.

### ARRIERE PLAN DE L'INVENTION

Il est connu d'identifier l'orientation du Nord géographique avec un chercheur de Nord comprenant un gyromètre associé à des moyens de calcul, ou bien avec un système à visée stellaire.

L'identification du Nord avec un chercheur à gyromètre repose sur un processus de mesure de la composante du vecteur de rotation terrestre dans un plan horizontal, c'est-à-dire tangent à la terre à l'emplacement où est installé le dispositif, cette composante étant dirigée vers le Nord géographique.

De tels moyens peuvent être utilisés avec des jumelles de fantassin : le chercheur de Nord et les jumelles rigidement solidarisés l'un à l'autre et connectés l'un à l'autre sont portés par un trépied, ce qui permet de déterminer le cap d'une cible. Lorsque cette cible est vue dans la jumelle, la connaissance de l'orientation du Nord géographique, c'est-à-dire la connaissance de l'orientation de la jumelle par rapport au Nord géographique correspond au cap où se trouve la cible.

Dans ce contexte, la précision angulaire recherchée est de l'ordre du milli radian. Les éventuels mouvements parasites, c'est-à-dire les mouvements du gyromètre par rapport au sol comme par exemple l'enfoncement du trépied, sont de nature à fausser la mesure réalisée par le gyromètre lors du processus d'initialisation de la valeur d'orientation de la jumelle par rapport au Nord géographique.

Pour éviter que ces mouvements parasites ne soient interprétés par le gyromètre comme étant dus à la rotation de la terre, un accéléromètre de précision est également prévu. Cet accéléromètre permet d'identifier les mouvements parasites pour les discriminer, afin qu'ils ne faussent pas la mesure de la rotation de la terre effectuée par le gyromètre, comme décrit par exemple dans le document US 2005/022402 A1. Par ailleurs, une limitation des chercheurs de Nord connus réside dans le fait que la phase d'initialisation de la valeur de l'orientation du Nord est réalisée de façon ponctuelle, de sorte que si la jumelle est déplacée après cette initialisation, l'information d'orientation du Nord qu'elle utilise est erronée.

Dans ce contexte, le document JP 2009 074859 A divulgue un procédé d'initialisation de l'orientation d'un système comprenant un capteur d'image et un chercheur de Nord, dans lequel le décalage entre deux images successives, issues du capteur d'image, est déterminé afin d'estimer un mouvement angulaire, qui peut être comparé au mouvement angulaire déterminé par le chercheur de Nord.

### OBJET DE L'INVENTION

Le but de l'invention est de proposer une solution permettant de réaliser à moindre coût l'initialisation et/ou l'actualisation du Nord géographique avec une précision satisfaisante.

### RESUME DE L'INVENTION

A cet effet, l'invention a pour objet un procédé pour initialiser, dans un système comprenant un capteur d'image orienté vers l'horizon et un chercheur de Nord de type gyroscopique ou gyrométrique rigidement solidarisé au capteur d'image, une valeur représentative de l'orientation du système par rapport au Nord, dans lequel on détermine le décalage de deux images issues du capteur d'image numérique à un premier instant et à un second instant distincts pour constituer une information représentative d'un mouvement angulaire, et dans lequel cette information de mouvement angulaire est exploitée pour discriminer les mouvements du système par rapport au sol des mouvements du système dus à la rotation de la terre, dans un processus d'initialisation de la valeur d'orientation du système par rapport au Nord utilisant un chercheur de Nord de type gyroscopique ou gyrométrique rigidement solidarisé au capteur d'image.

Dans ces conditions, le capteur d'image qui fait nécessairement partie du système utilisé est exploité pour fournir les informations représentatives des mouvements du système par rapport au sol, de sorte que le capteur accélérométrique habituellement utilisé pour fournir ces informations n'est plus nécessaire.

L'invention concerne également un procédé tel que défini ci-dessus, dans lequel la détermination du décalage des deux images est assurée par un traitement d'image du type utilisé pour la stabilisation d'image, dans lequel les deux images sont comparées de façon globale pour déterminer le décalage de ces deux images.

L'invention concerne également un procédé tel que défini ci-dessus, dans lequel la détermination du décalage des deux images est assurée en identifiant un même objet dans ces deux images, en déterminant la position de cet objet dans chacune de ces images, et en déterminant la différence des positions ainsi déterminées.

L'invention concerne également un procédé tel que défini ci-dessus, dans lequel les images dont le décalage est déterminé sont deux images représentatives de la scène vue par le capteur d'images à deux instants distincts, pour que ce décalage soit représentatif des mouvements du capteur d'images numérique par rapport au sol.

L'invention concerne également un procédé tel que défini ci-dessus, dans lequel les deux images dont le décalage est déterminé sont d'une part une image intermédiaire correspondant à une image de la scène vue par le capteur d'image à un premier instant et décalée d'une valeur correspondant au mouvement mesuré par le chercheur de Nord durant l'intervalle séparant le premier instant du deuxième instant, et une image correspondant à la scène vue par le capteur d'image au second instant, pour que ce décalage soit représentatif du mouvement de la terre vue depuis un repère inertiel pendant l'intervalle de temps séparant le premier instant du deuxième instant.

L'invention concerne également un procédé tel que défini ci-dessus, dans lequel le processus d'initialisation utilise un chercheur de nord de type centrale inertielle.

L'invention concerne également un procédé tel que défini ci-dessus, dans lequel la centrale inertielle est à base de composants de type microsystèmes électromécaniques (MEMS).

### DESCRIPTION DETAILLEE DE L'INVENTION

L'idée à la base de l'invention est d'associer un capteur d'image numériques à un gyromètre en les solidarisant rigidement l'un à l'autre, afin de mesurer les mouvements du système par rapport au sol en comparant les images issues du capteur numérique d'image.

Dans ces conditions, l'exploitation des images issues du capteur numérique d'images remplace à faible coût l'utilisation d'un accéléromètre de précision dédié à la mesure des mouvements du système par rapport au sol.

Concrètement le chercheur de Nord qui comporte un gyromètre intégrant des moyens de calcul associés est monté sur un trépied supportant un capteur numérique d'image tel qu'une jumelle numérique. Le gyromètre est connecté à cette jumelle, par exemple par un câble de transmission de données, pour échanger des données avec cette jumelle. La jumelle est rigidement solidarisée au chercheur de Nord, de sorte que lorsqu'elle tourne autour d'un axe vertical, le chercheur de Nord tourne avec elle, et elle est orientée sensiblement vers l'horizon.

Lorsque le processus de recherche du Nord est enclenché par l'utilisateur, le gyromètre et les moyens de calcul mesurent les mouvements du gyromètre pour déterminer la composante du vecteur de rotation de la terre dans un plan tangent à la terre à l'emplacement où est installé l'ensemble.

Ce processus permet à l'appareillage de déterminer l'orientation du Nord géographique, c'est-à-dire d'initialiser une valeur représentative de l'orientation du chercheur de Nord avec la jumelle à laquelle il est rigidement solidarisé, par rapport au Nord géographique.

De manière générale, les mouvements subis par le gyromètre comportent le mouvement de la terre à l'emplacement où est installé le gyromètre, et les éventuels mouvements du gyromètre par rapport au sol, dus par exemple à un enfoncement du trépied, et qui constituent des mouvements parasites vis-à-vis de la recherche du Nord.

Pour améliorer la précision de détermination du Nord dans le processus d'initialisation, les mouvements parasites sont discriminés, c'est-à-dire qu'ils sont évalués et retranchés des mouvements mesurés par le gyromètre. La mesure de la rotation de la terre ne prend ainsi pas en compte ces mouvements parasites, mais seulement le mouvement de la terre à l'emplacement du système.

Selon l'invention, les mouvements parasites sont déterminés, pendant le processus de détermination du Nord, par analyse des images successives issues de la jumelle numérique pour mesurer le décalage spatial entre deux images acquises à un premier instant et à un second instant différents afin de déduire le mouvement angulaire parasite de l'appareillage comprenant la jumelle et le chercheur de Nord durant l'intervalle de temps séparant ces deux images.

Le système comporte des moyens d'analyse d'image permettant par exemple d'identifier un objet remarquable dans une image donnée, cet objet présentant par exemple un contraste relativement important délimitant un contour de forme pouvant être identifiée de manière automatisée et sure.

La détection de mouvements parasites consiste ainsi à identifier dans une image représentative de la scène vue par le capteur d'image, un élément remarquable et à déterminer sa position dans cette première image, puis à identifier ce même élément dans une seconde image, postérieure et elle aussi représentative de la scène vue par le capteur, pour déterminer sa position dans cette autre image. Comme on l'aura compris, la différence de position correspond au décalage spatial des deux images.

Ce décalage correspond par exemple à un certain nombre de pixels, attendu que compte tenu de la résolution du capteur d'image numérique équipant la jumelle, un déplacement d'un objet dans l'image sur une distance de un pixel correspond à une valeur angulaire prédéterminée de rotation de la jumelle.

Dans ces conditions, la connaissance du décalage des deux images permet de déterminer de manière très simple le mouvement de rotation correspondant de la jumelle, pour qu'il soit discriminé dans le processus de mesure de la rotation de la terre permettant d'initialiser la valeur représentative de l'orientation de l'appareillage par rapport au Nord géographique.

Complémentairement, la connaissance de la durée séparant les instants auxquels ont été acquises les deux images analysées permet de déterminer de manière simple la vitesse de rotation de la jumelle par rapport au sol, pour qu'elle soit discriminée dans le processus de mesure de la rotation de la terre.

Le décalage des images, est avantageusement compté selon un axe vertical des images, ce qui correspond alors à une rotation de la jumelle autour d'un axe horizontal orienté transversalement à la direction de visée, qui est de nature à perturber fortement la mesure de l'axe de rotation de la terre, c'est-à-dire l'initialisation du Nord géographique.

Le traitement d'analyse d'image utilisé pour déterminer le décalage spatial des image peut aussi être un traitement de type global, c'est-à-dire dans lequel le décalage de deux images est identifié en les comparant globalement au lieu de rechercher dans ces images un élément particulier qu'elles comportent toutes les deux.

Un tel traitement est relativement proche des traitements connus dans le domaine de la stabilisation d'image numérique, où l'on recherche également à connaître le décalage spatial de deux images acquises afin de recaler l'image affichée.

A titre d'exemple, la précision dans l'évaluation du décalage spatial de deux images peut atteindre 1/100ème de pixel, et la résolution du capteur numérique d'image équipant les jumelles peut être telle que l'angle de rotation correspondant à une distance de un pixel dans l'image vaut 140 micro radians. Dans ces conditions, la précision de détection des mouvements parasites est de l'ordre 1,4 micro radians, ce qui est très inférieur à la précision recherchée pour l'initialisation du Nord, qui est elle de l'ordre du milli radian.

Des images séparées temporellement de 10 secondes peuvent donc détecter un mouvement aussi faible que 0,14 micro radians/seconde, ce qui est près de 1000 fois inférieur à la rotation terrestre (10 degrés par heure sous nos latitudes, soit 50 micro radians par seconde), précision recherchée pour l'initialisation du Nord à une précision de l'ordre du milli radian.

Selon une autre approche, on raisonne selon un référentiel inertiel. On effectue l'acquisition d'une première image, puis le gyromètre mesure les mouvements qu'il subit pendant un intervalle de temps prédéterminé, qui comportent alors la rotation de la terre et un éventuel mouvement parasite du système par rapport au sol. Une nouvelle image est alors acquise.

Un traitement est alors appliqué à la première image pour former une image intermédiaire qui correspond à la première image déplacée d'une valeur correspondant aux mouvements mesurés par le gyromètre. L'image intermédiaire et la nouvelle image sont ensuite analysées pour déterminer leur décalage qui correspond alors uniquement à la rotation de la terre.

Dans ce processus, l'image intermédiaire est décalée par rapport à la première image d'une valeur correspondant au mouvement de rotation de la terre augmenté du mouvement parasite, alors que la nouvelle image est décalée par rapport à la première d'une amplitude qui correspond uniquement au mouvement parasite. Par conséquent, la distance séparant l'image intermédiaire et la nouvelle image correspond uniquement au mouvement de rotation de la terre.

Ainsi, dans ce cas, le mouvement de rotation de la terre affranchi d'un éventuel mouvement parasite, est déterminé à partir du décalage de l'image intermédiaire et de la nouvelle image. Cela a pour avantage d'éliminer les mouvements parasites de grande amplitude. Le traitement d'image fonctionne alors uniquement sur les petits déplacements induits par la rotation terrestre, ce qui permet de le rendre plus précis.

D'une manière générale, la jumelle avec le chercheur de Nord rigidement solidarisé à celle-ci peut être tenue à bras-francs lors de l'initialisation du Nord géographique. Dans ce cas, la jumelle est équipée d'un capteur d'horizontalité, contraignant l'utilisateur à la maintenir sensiblement horizontale, c'est-à-dire orientée vers l'horizon.

En pratique, la jumelle comporte en outre un capteur déterminant son inclinaison par rapport à l'horizontale. Une erreur dans la mesure de cette inclinaison de 1 milli radian étant acceptable durant le processus d'initialisation du Nord géographique, le capteur d'horizontalité utilisé peut être un capteur à bas coût de type MEMS, c'est-à-dire Micro-Electro-Mechanical-System.

Comme expliqué ci-dessus, l'exploitation d'un capteur numérique d'image permet de remplacer avantageusement un accéléromètre de précision pour déterminer les mouvements parasites, à savoir les mouvements du système par rapport au sol durant le processus d'initialisation du Nord géographique.

Mais l'exploitation d'un capteur numérique peut également être utilisée pour actualiser dans la jumelle une information représentative de l'orientation de cette jumelle par rapport au Nord lorsque la jumelle est déplacée en étant utilisée après exécution du processus de détermination du Nord.

Dans ce cas, après identification du Nord, les mouvements de la jumelle sur son trépied peuvent, de manière analogue être mesurées en analysant et en comparant les images issues du capteur numérique équipant la jumelle.

Le traitement d'image peut être du même type que celui décrit plus haut, en étant basé sur la reconnaissance d'un objet remarquable dans l'image et l'identification de sa position dans les images successives, de manière à déterminer, à partir du déplacement de cet objet dans les images, l'angle ou les angles de rotation de la jumelle. Il peut également s'agir d'un traitement global, du type correspondant aux traitements utilisés en stabilisation d'image.

Autrement dit, l'utilisateur de la jumelle peut alors la faire tourner, par exemple autour d'un axe vertical pour scruter son environnement, tout en bénéficiant dans cette jumelle d'une information valable concernant son orientation par rapport au Nord. En pratique, cette information peut être présentée à l'utilisateur sous forme d'un affichage du cap correspondant à l'orientation courante de la jumelle, ce cap étant corrigé correctement au fur et à mesure que la jumelle est déplacée en rotation sur son trépied.

Si par exemple la mesure de rotation par traitement d'image est précise à 3 micro radians entre deux images, l'erreur sur une série de N images vaut, en micro radians, 3 fois la racine carrée de N. Avec une cadence video de 25 images acquises chaque seconde, l'information d'orientation du Nord peut être actualisée et conservée valablement avec une précision de un milli radian pendant une durée supérieure à une heure.

Par ailleurs, une image de référence peut être mémorisée dans la jumelle en association avec l'orientation correspondante. Dans ce cas, lorsque la jumelle est ultérieurement pointée selon la même orientation, l'image reçue par le capteur d'image peut être comparée avec l'image de référence, ce qui permet alors de recaler l'orientation de la jumelle, pour par exemple compenser une dérive de l'orientation calculée dans la jumelle.

Comme indiqué plus haut, la jumelle n'est pas nécessairement portée par un trépied : elle peut être tenue à bras-francs lors de l'initialisation du Nord, mais également ensuite. Dans ce cas, la valeur représentative de l'orientation de la jumelle par rapport au Nord est alors actualisée sur la base d'analyse d'images.

Dans ce contexte, il est également possible d'équiper la jumelle d'un gyromètre à trois axes, voire d'une centrale inertielle, à bas coût, par exemple de type MEMS pour par exemple prendre le relais lorsque l'analyse d'image est insuffisante, du fait par exemple que la scène visualisée par le capteur numérique d'image n'est pas suffisamment contrastée, ou bien lorsque les déplacements que l'utilisateur applique à la jumelle sont trop importants.

Dans ce cas, le capteur MEMS mesure directement et de manière autonome toutes les rotations de la jumelle, de manière à pouvoir fournir une information de variation d'orientation de la jumelle dans les situations où celle-ci ne peut être produite par l'analyse des images. Le capteur MEMS de type centrale inertielle mesure aussi les mouvements latéraux de la jumelle pour prendre en compte les effets possibles de parallaxe.

En pratique, les capteurs gyrométriques MEMS à trois axes ont un faible coût, au détriment d'une dérive importante : les informations de déplacement angulaire qu'ils fournissent ne peuvent être considérées comme valables que pendant une durée de quelques secondes, compte tenu de la précision recherchée dans cette application.

Mais, comme on le comprend, leur mise en oeuvre peut être utile pour compenser une déficience de l'analyse d'images de quelques secondes.

D'une manière plus générale, un tel système peut également être utilisé pour équiper un véhicule : le Nord est alors identifié à l'arrêt du véhicule, puis il est maintenu, c'est-à-dire actualisé, grâce aux images acquises par le capteur d'image au cours du déplacement du véhicule. Dans ce cadre, le traitement d'image peut consister à détecter les rotations comme indiqué plus haut, par comparaison d'images successives, mais il peut également être assuré à partir de deux capteurs d'images orientés de part et d'autre de la direction d'avancement du véhicule pour mesurer le défilement du paysage par comparaison d'images successives.

Avantageusement, un tel système est combiné à une analyse de trajectoire, sur la base de données issues d'un GPS et/ou d'une centrale inertielle à technologie MEMS, de manière à recaler le Nord lorsque le véhicule a une trajectoire simple. Le Nord peut alors raisonnablement être conservé pendant une durée de une heure, sans nécessiter de recalage, c'est-à-dire sans nécessité d'exécuter le processus de détermination du Nord à partir du gyromètre.

## Revendications

1. Procédé pour initialiser, dans un système comprenant un capteur d'image orienté vers l'horizon et un chercheur de Nord de type gyroscopique ou gyrométrique rigidement solidarisé au capteur d'image, une valeur représentative de l'orientation du système par rapport au Nord, le système comprenant des moyens de traitement mettant en oeuvre le procédé qui comprend l'étape de :
- déterminer le décalage de deux images issues du capteur d'image numérique à un premier instant et à un second instant distincts pour constituer une information représentative d'un mouvement angulaire, **caractérisé en ce qu'**il comprend également l'étape de :
- discriminer les mouvements du système par rapport au sol des mouvements du système dus à la rotation de la terre à partir de cette information de mouvement angulaire.

2. Procédé selon la revendication 1, dans lequel la détermination du décalage des deux images est assurée par un traitement d'image du type utilisé pour la stabilisation d'image, dans lequel les deux images sont comparées de façon globale pour déterminer le décalage de ces deux images.

3. Procédé selon la revendication 1, dans lequel la détermination du décalage des deux images est assurée en identifiant un même objet dans ces deux images, en déterminant la position de cet objet dans chacune de ces images, et en déterminant la différence des positions ainsi déterminées.

4. Procédé selon la revendication 1, dans lequel les images dont le décalage est déterminé sont deux images représentatives de la scène vue par le capteur d'images à deux instants distincts, pour que ce décalage soit représentatif des mouvements du capteur d'images numérique par rapport au sol.

5. Procédé selon la revendication 1, dans lequel les deux images dont le décalage est déterminé sont d'une part une image intermédiaire correspondant à une image de la scène vue par le capteur d'image à un premier instant et décalée d'une valeur correspondant au mouvement mesuré par le chercheur de Nord durant l'intervalle séparant le premier instant du deuxième instant, et une image correspondant à la scène vue par le capteur d'image au second instant, pour que ce décalage soit représentatif du mouvement de la terre vue depuis un repère inertiel pendant l'intervalle de temps séparant le premier instant du deuxième instant.

6. Procédé selon l'une des revendications 1 à 5, dans lequel le processus d'initialisation utilise un chercheur de nord à centrale inertielle.

7. Procédé selon la revendication 6, dans lequel la centrale inertielle est à base de composants de type microsystèmes électromécaniques (MEMS).

## Patentansprüche

1. Verfahren zum Initialisieren eines Wertes in einem System, das einen Bildsensor umfasst, der zum Horizont gerichtet ist, sowie einen Nordsucher vom gyroskopischen oder gyrometrischen Typ, der starr mit dem Bildsensor verbunden ist, wobei der Wert repräsentativ für die Ausrichtung des Systems in Bezug auf Nord ist, wobei das System Verarbeitungsmittel umfasst, die das Verfahren ausführen, welches den Schritt umfasst:
- Bestimmen des Versatzes zweier Bilder, die aus dem digitalen Bildsensor zu einem ersten Zeitpunkt und zu einem zweiten Zeitpunkt, die unterschiedlich sind, stammen, um eine Information zu bilden, die repräsentativ für eine Winkelbewegung ist,
**dadurch gekennzeichnet, dass** es ferner den Schritt umfasst:
- Unterscheiden der Bewegungen des Systems in Bezug auf den Boden von Bewegungen des Systems, die auf die Drehung der Erde zurückzuführen sind, anhand dieser Winkelbewegungsinformation.

2. Verfahren nach Anspruch 1, bei dem die Bestimmung des Versatzes der beiden Bilder durch eine Bildverarbeitung der Art sichergestellt wird, die zur Bildstabilisierung verwendet wird, bei der die beiden Bilder auf globale Weise verglichen werden, um den Versatz dieser beiden Bilder zu bestimmen.

3. Verfahren nach Anspruch 1, bei dem die Bestimmung des Versatzes der beiden Bilder dadurch sichergestellt wird, dass ein selbes Objekt in diesen beiden Bildern identifiziert wird, indem die Position dieses Objektes in jedem dieser Bilder bestimmt wird und indem der Unterschied der so bestimmten Positionen bestimmt wird.

4. Verfahren nach Anspruch 1, bei dem die Bilder, deren Versatz bestimmt wird, zwei Bilder sind, die repräsentativ für die Szene sind, die von dem Bildsensor zu zwei unterschiedlichen Zeitpunkten gesehen werden, damit dieser Versatz repräsentativ für Bewegungen des digitalen Bildsensors in Bezug auf den Boden ist.

5. Verfahren nach Anspruch 1, bei dem die beiden Bilder, deren Versatz bestimmt wird, einerseits ein Zwischenbild, das einem Bild der Szene entspricht, die von dem Bildsensor zu einem ersten Zeitpunkt gesehen wird, versetzt um einen Wert, der der von dem Nordsucher gemessenen Bewegung während eines Intervalls entspricht, das den ersten Zeitpunkt von dem zweiten Zeitpunkt trennt, sowie ein Bild sind, das der Szene entspricht, die von dem Bildsensor zum zweiten Zeitpunkt gesehen wird, damit dieser Versatz repräsentativ für die Bewegung der Erde ist, die von einem inertialen Bezugssystem während des Zeitinteralls, das den ersten Zeitpunkt von dem zweiten Zeitpunkt trennt, gesehen wird.

6. Verfahren nach einem der Ansprüche 1 bis 5, bei dem der Initialisierungsprozess einen Nordsucher mit einer inertialen Messeinheit verwendet.

7. Verfahren nach Anspruch 6, bei dem die inertiale Messeinheit auf Komponenten der Art elektromechanische Mikrosysteme (MEMS) basiert.

## Claims

1. A method for initializing, in a system comprising an image sensor oriented toward the horizon and a North seeker of gyroscopic or gyrometric type rigidly attached to the image sensor, a value representative of the orientation of the system with respect to the North, the system comprising calculating means implementing the method which comprises the step of:
- determining the offset of two images output by the digital image sensor at distinct first and second instants so as to constitute an item of information representative of an angular movement,
**characterized in that** it also comprises the step of:
- discriminating between the movements of the system with respect to the ground and the movements of the system due to the rotation of the Earth from the item of information representative of an angular movement.

2. The method as claimed in claim 1, in which the determination of the offset of the two images is carried out by an image processing of the type used for image stabilization, in which the two images are compared in a global manner to determine the offset of these two images.

3. The method as claimed in claim 1, in which the determination of the offset of the two images is carried out by identifying a same object in these two images, by determining the position of this object in each of these images, and by determining the difference between the positions thus determined.

4. The method as claimed in claim 1, in which the images of which the offset is determined are two images representative of the scene seen by the image sensor at two distinct instants, so that the offset is representative of the movements of the digital image sensor with respect to the ground.

5. The method as claimed in claim 1, in which the two images of which the offset is determined are on the one hand an intermediate image corresponding to an image of the scene seen by the image sensor at a first instant and offset by a value corresponding to the movement measured by the North seeker during the interval separating the first instant from the second instant, and an image corresponding to the scene seen by the image sensor at the second instant, so that this offset is representative of the movement of the earth seen from an inertial reference frame during the time interval separating the first instant from the second instant.

6. The method as claimed in one of claims 1 to 5, in which the initialization process uses a North seeker with an Inertial Measurement Unit.

7. The method as claimed in claim 6, in which the Inertial Measurement Unit is based on MEMS-type components.
